(19) Europäisches Patentamt
European Patent Office
Office européen des brevets

(11) **EP 4 070 048 B1**

(12) **EUROPÄISCHE PATENTSCHRIFT**

(45) Veröffentlichungstag und Bekanntmachung des Hinweises auf die Patenterteilung:
**22.05.2024 Patentblatt 2024/21**

(21) Anmeldenummer: **20811281.3**

(22) Anmeldetag: **20.11.2020**

(51) Internationale Patentklassifikation (IPC):
**G01F 23/284** (2006.01)   **G01S 13/86** (2006.01)
**G01S 13/88** (2006.01)

(52) Gemeinsame Patentklassifikation (CPC):
**G01F 23/284; G01S 13/86; G01S 13/88**

(86) Internationale Anmeldenummer:
**PCT/EP2020/082849**

(87) Internationale Veröffentlichungsnummer:
**WO 2021/110432 (10.06.2021 Gazette 2021/23)**

(54) **FÜLLSTANDSMESSGERÄT**

LEVEL METER

APPAREIL DE MESURE DE NIVEAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.12.2019 DE 102019133245**

(43) Veröffentlichungstag der Anmeldung:
**12.10.2022 Patentblatt 2022/41**

(73) Patentinhaber: **Endress+Hauser SE+Co. KG**
**79689 Maulburg (DE)**

(72) Erfinder:
• **MAYER, Winfried**
 **89290 Buch (DE)**
• **FABER, Harald**
 **79541 Lörrach (DE)**

(74) Vertreter: **Koslowski, Christine Adelheid**
**Endress+Hauser Group Services**
**(Deutschland) AG+Co. KG**
**Colmarer Straße 6**
**79576 Weil am Rhein (DE)**

(56) Entgegenhaltungen:
WO-A1-2017/137136   DE-A1-102016 113 268
DE-B3-102016 108 594   DE-B4-102006 058 852
KR-A- 20150 108 681

EP 4 070 048 B1

## Beschreibung

Die Erfindung betrifft ein Füllstandsmessgerät, das für Hochtemperatur-Anwendungen geeignet ist.

In der Automatisierungstechnik, insbesondere zur Prozessautomatisierung werden vielfach Feldgeräte eingesetzt, die zur Erfassung diverser Messgrößen dienen. Bei der zu bestimmenden Messgröße kann es sich beispielsweise um einen Füllstand, einen Durchfluss, einen Druck, die Temperatur, den pH-Wert, das Redoxpotential, eine Leitfähigkeit oder den Dielektrizitätswert eines Mediums in einer Prozessanlage handeln. Zur Erfassung der entsprechenden Messwerte umfassen die Feldgeräte jeweils geeignete Sensoren bzw. basieren auf geeigneten Messprinzipien. Eine Vielzahl verschiedener Feldgeräte-Typen wird von der Firmen-Gruppe Endress + Hauser hergestellt und vertrieben.

Zur Füllstandsmessung von Füllgütern in Behältern haben sich Radar-basierte Messverfahren etabliert, da sie robust und wartungsarm sind. Dabei werden unter dem Begriff "Behälter" im Rahmen der Erfindung auch nicht-abgeschlossene Behältnisse, wie beispielsweise Becken, Seen oder fließende Gewässer verstanden. Ein zentraler Vorteil Radar-basierter Messverfahren besteht in der Fähigkeit, den Füllstand quasi kontinuierlich messen zu können. Im Kontext dieser Patentanmeldung bezieht sich der Begriff "Radar" auf Radar-Signale mit Frequenzen zwischen 0.03 GHz und 300 GHz. Übliche Frequenzbänder, bei denen Füllstandsmessung bzw. Abstandsmessung allgemein durchgeführt wird, liegen bei 2 GHz, 26 GHz, 79 GHz, oder 120 GHz. Die beiden gängigen Messprinzipien bilden hierbei das Puls-Laufzeit-Prinzip (auch unter dem Begriff "Pulsradar" bekannt) sowie das FMCW-Prinzip ("Frequency Modulated Continuous Wave"). Ein Füllstandsmessgerät, welches nach dem Puls-Laufzeit-Verfahren arbeitet, ist beispielsweise in der Offenlegungsschrift DE 10 2012 104 858 A1 beschrieben. Bezüglich eines typischen Aufbaus von FMCW-basierten Füllstandsmessgeräten sei exemplarisch auf die Offenlegungsschrift DE 10 2013 108 490 A1 verwiesen.

Die WO 2017/137136 A1 und die DE 10 2016 108594 B3 beschreiben jeweils ein radar-basiertes Füllstandsmessgerät zur Messung eines Füllstandes eines in einem Behälter befindlichen Füllgutes gemäß dem Stand der Technik.

Im Falle beider Messprinzipien wird der Füllstand bzw. der Abstand zum Füllgut zyklisch wiederkehrend mit einer definierten Messrate gemessen. Näher beschrieben werden die Messprinzipien von FMCW und Pulsradar beispielsweise in "Radar Level Detection, Peter Devine, 2000".

Füllstandsmessgeräte kommen zumeist in Prozessumgebungen zum Einsatz, an denen die Außentemperatur oder Raumtemperatur vorherrscht. Speziell bei hygienisch sensiblen Prozessanlagen, wie beispielsweise in der Lebensmittelindustrie, werden in den entsprechenden Prozess-Behältern jedoch oftmals temporäre Reinigungszyklen mit Temperaturen von mehr als 130° C durchgeführt, was nahe der Junction-Temperatur Halbleiterbasierter Schaltungen von ca. 150° C liegt. Oberhalb dieser Temperatur funktioniert die entsprechende Halbleiterschaltung und somit das Füllstandsmessgerät daher nicht sachgemäß. Aufgrund der resultierenden geringen Temperatur-Reserve kann das Füllstandsmessgerät daher zumindest während und nach den Reinigungszyklen nicht eingesetzt werden.

Der Erfindung liegt daher die Aufgabe zugrunde, ein Füllstandsmessgerät bereitzustellen, das auch bei erhöhter Umgebungs-Temperatur einsetzbar ist.

Die Erfindung löst diese Aufgabe gemäß Anspruch 1 durch ein Radar basiertes Füllstandsmessgerät zur Messung eines Füllstandes eines in einem Behälter befindlichen Füllgutes. Hierzu umfasst das Füllstandsmessgerät zumindest:

- Eine Signalerzeugungs-Einheit, die ausgelegt ist, entsprechend einer einstellbaren Messrate ein elektrisches Hochfrequenz-Signal zu erzeugen,
- eine Antennen-Anordnung, mittels der das Hochfrequenz-Signal als Radar-Signal in Richtung des Füllgutes aussendbar und nach Reflektion an der Oberfläche des Füllgutes als entsprechendes Empfangssignal empfangbar ist,
- eine Auswertungs-Einheit, die ausgelegt ist, um zumindest anhand des Empfangssignals in der einstellbaren Messrate den Füllstand zyklisch neu zu bestimmen,
- einen Temperatursensor, der ausgelegt ist die Temperatur an der Signalerzeugungs-Einheit und/oder an der Auswertungs-Einheit zu messen.

Erfindungsgemäß sind die Signalerzeugungs-Einheit und die Auswertungs-Einheit ausgelegt, um die Messrate derart in Abhängigkeit der gemessenen Temperatur zu regeln, dass die Messrate zumindest oberhalb einer definierten Grenztemperatur von beispielsweise 100 °C mit steigender Temperatur insbesondere linear oder stufenweise vermindert wird. Dies bewirkt, dass sich trotz ihrer Nähe zu Reinigungsvorgängen vor allem stark erhitzende Bauteile innerhalb der Signalerzeugungs-Einheit und der Auswertungs-Einheit, wie etwaige Verstärker, sich selbst nur begrenzt erwärmen. Dadurch kann auf flexible Weise verhindert werden, dass die Bauteile des Füllstandsmessgerätes die Junction Temperatur erreichen. Mittels der erfindungsgemäßen Regelung kann das Füllstandmessgerät mit entsprechend geringer Messrate also gegebenenfalls auch während etwaiger Reinigungszyklen eingesetzt werden.

In Bezug zum Füllstandsmessgerät wird unter dem Begriff "Einheit" im Rahmen der Erfindung prinzipiell jede elektronische Schaltung verstanden, die für den jeweiligen Bestimmungszweck geeignet ausgelegt ist. Es kann sich also je nach Anforderung um eine Analogschaltung zur Erzeugung bzw. Verarbeitung entsprechender analoger Signale handeln. Es kann sich jedoch auch um eine Digitalschaltung wie einem Microcontroller oder um ein Speichermedium in Zusammenwirken mit einem Programm handeln. Dabei ist das Programm ausgelegt, die entsprechenden Verfahrensschritte durchzuführen bzw. die notwendigen Rechenoperationen der jeweiligen Einheit anzuwenden. In diesem Kontext können verschiedene elektronische Einheiten des Füllstandsmessgerätes im Sinne der Erfindung potentiell auch auf einen gemeinsamen physikalischen Speicher zurückgreifen bzw. mittels derselben physikalischen Digitalschaltung betrieben werden.

Erfindungsgemäß ist vorgesehen, dass die Signalerzeugungs-Einheit und die Auswertungs-Einheit ausgelegt werden, die Füllstandsmessung komplett zu stoppen, sofern die gemessene Temperatur einen vordefinierten Maximalwert, insbesondere die Junction-Temperatur von 150 °C überschreitet. Vorteilhaft ist dies insbesondere, wenn die Signalerzeugungs-Einheit bzw. die Auswertungs-Einheit als monolithischer Bestandteil eines ASIC's ausgelegt sind. Sofern die Signalerzeugungs-Einheit einen Sende-Verstärker zur Verstärkung des Hochfrequenz-Signals umfasst, bietet es sich auch an, den Temperatursensor direkt am Sende-Verstärker anzuordnen, da sich ein solcher Verstärker in der Praxis mit Abstand am stärksten selbst erhitzt und somit zumindest im Falle einer ASIC-basierten Auslegung die wärmste Stelle darstellt. Zudem ist der Sende-Verstärker normalerweise in Bezug zu den meisten weiteren Bauteilen des Füllstandsmessgerätes nahe der Antenne angeordnet und somit etwaigen Reinigungszyklen sehr nahe.

Im Rahmen der Erfindung kann das Füllstandsmessgerät sowohl gemäß dem Pulslaufzeit-Verfahren, als auch gemäß dem FMCW-Verfahren ausgelegt sein: Im Fall des Pulslaufzeit-Verfahrens ist die Signalerzeugungs-Einheit so auszulegen, dass das elektrische Hochfrequenz-Signal gemäß dem Pulslaufzeit-Verfahren erzeugt wird. Die Auswertungs-Einheit ist entsprechend ausgelegt, den Füllstand gemäß dem Pulslaufeit-Verfahren anhand des abgetasteten Empfangssignals zu bestimmen.

Bei Implementierung des FMCW-Verfahrens ist die Signalerzeugungs-Einheit wiederum entsprechend auszulegen, um das elektrische Hochfrequenz-Signal gemäß dem FMCW-Verfahren zu erzeugen, bzw. die Auswertungs-Einheit ist so zu konzipieren, dass der Füllstand entsprechend dem FMCW-Verfahren mittels Mischen des Hochfrequenz-Signals und des Empfangssignals bestimmt wird.

Korrespondierend zu dem erfindungsgemäßen Füllstandsmessgerät wird die Aufgabe, die Erfindung zugrunde liegt, außerdem gemäß Anspruch 8 durch ein Verfahren zum Betrieb Messgerätes gemäß einer der zuvor beschrieben Ausführungsvarianten gelöst. Dementsprechend umfasst das Verfahren zumindest die folgenden Verfahrensschritte:

- Erzeugung eines elektrischen Hochfrequenz-Signals entsprechend einer veränderbaren Messrate,

- Aussenden des Hochfrequenz-Signals als Radar-Signal in Richtung des Objektes,
- Empfang des reflektierten Radar-Signals als elektrisches Empfangssignal nach Reflektion an dem Objekt,
- zyklische Neubestimmung des Abstandes anhand von zumindest dem Empfangssignal in der einstellbaren Messrate,
- Messung der Temperatur an der Signalerzeugungs-Einheit und/oder an der Auswertungs-Einheit.

Dabei wird die Messrate derart in Abhängigkeit der gemessenen Temperatur geregelt, dass die Messrate zumindest oberhalb einer definierten Grenztemperatur mit steigender Temperatur vermindert wird. Zudem wird die Füllstandsmessung gestoppt, sofern die gemessene Temperatur eine vordefinierte Maximaltemperatur überschreitet.

Anhand der nachfolgenden Figuren wird die Erfindung näher erläutert. Es zeigt:

Fig. 1: Eine typische Anordnung eines Radar-basierten Füllstandsmessgerätes an einem Behälter,
Fig. 2: ein schaltungstechnischer Aufbau eine FMCW-Radar-basierten Füllstandsmessgerätes,
Fig. 3: ein schaltungstechnischer Aufbau eines Füllstandsmessgerätes, welches gemäß dem Pulslaufzeit-Verfahren arbeitet, und
Fig. 4: eine erfindungsgemäße Regelung der Messrate in Abhängigkeit der Temperatur im Füllstandsmessgerät.

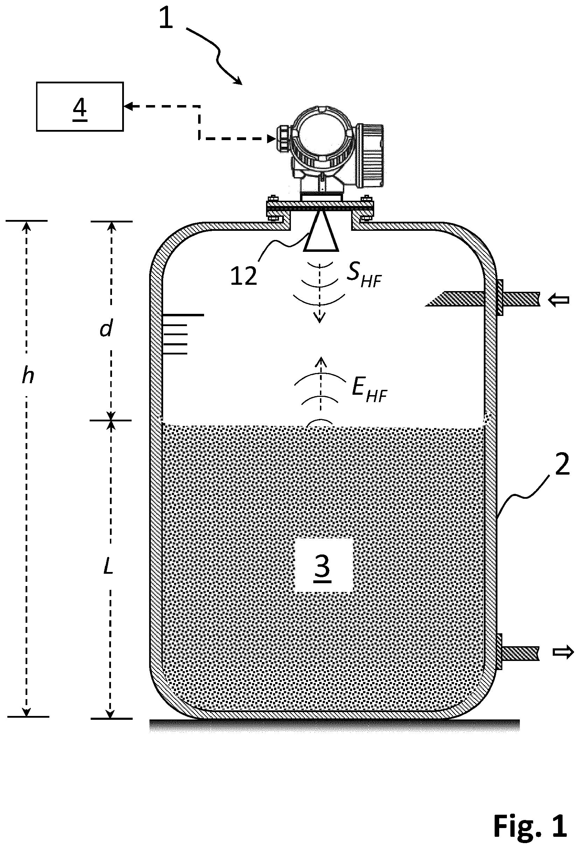

Zum grundsätzlichen Verständnis der erfindungsgemäßen Abstandsmessung ist in Fig. 1 eine typische Anordnung eines frei abstrahlenden, Radar-basierten Füllstandsmessgerätes 1 an einem Behälter 3 gezeigt. In dem Behälter 3 befindet sich ein Füllgut 2, dessen Füllstand L durch das Füllstandsmessgerät 1 zu bestimmen ist. Dazu ist das Füllstandsmessgerät 1 oberhalb des maximal zulässigen Füllstands L am Behälter 3 angebracht. Je nach Einsatzgebiet kann die Höhe h des Behälters 3 zwischen lediglich 30 cm bis zu 125 m betragen.

In der Regel ist das Füllstandsmessgerät 1 über ein Bussystem, etwa "Ethernet", "PROFIBUS", "HART" oder "Wireless HART" mit einer übergeordneten Einheit 4, beispielsweise einem Prozessleitsystem oder einer dezentralen Datenbank verbunden. Hierüber können zum einen Informationen über den Betriebszustand des Füllstandsmessgerätes 1 kommuniziert werden. Über das Bussystem können jedoch auch Informationen über den Füllstand L übermittelt werden, um gegebenenfalls am Behälter 3 vorhandene Zu- oder Abflüsse zu steuern.

Da das in Fig. 1 dargestellte Füllstandsmessgerät 1 als frei abstrahlendes Radar-Messgerät ausgelegt ist, umfasst es eine entsprechende Sende-/Empfangs-Antenne 12. Dabei kann die Antenne 12, wie angedeutet, beispielswiese als Hornantenne ausgelegt sein. Unabhängig von der Bauform ist die Sende-/Empfangs-Antenne 12 so ausgerichtet, dass gemäß dem FMCW- oder Pulslaufzeit-Prinzip ein entsprechendes Radar-Signal $S_{HF}$ in Richtung des Füllgutes 3 ausgesendet wird.

An der Oberfläche des Füllgutes 3 wird das Radar-Signal $S_{HF}$ reflektiert und nach einer korrespondierenden Signallaufzeit von der Sende-/Empfangs-Antenne 12 entsprechend als elektrisches Empfangssignal $e_{HF}$ empfangen. Hierbei hängt die Signallaufzeit des Radar-Signals $S_{HF}$, $E_{HF}$ vom Abstand d = h - L des Füllstandsmessgerätes 1 zur Füllgut-Oberfläche ab.

Im Gegensatz zu der gezeigten Ausführungsvariante können anstelle einer einzigen Sende-/Empfangs-Antenne 12 auch zwei getrennte Antennen zum separaten Senden und Empfangen des Radar-Signals $S_{HF}$, $E_{HF}$ eingesetzt werden. Eine weitere Alternative besteht darin, eine elektrisch leitfähige Sonde, wie einen Hohlleiter oder ein Koaxialkabel, einzusetzen, die sich gen Behälterboden erstreckt. Bekannt ist diese Ausführungsvariante unter dem Begriff TDR ("*Time Domain Reflectometry*").

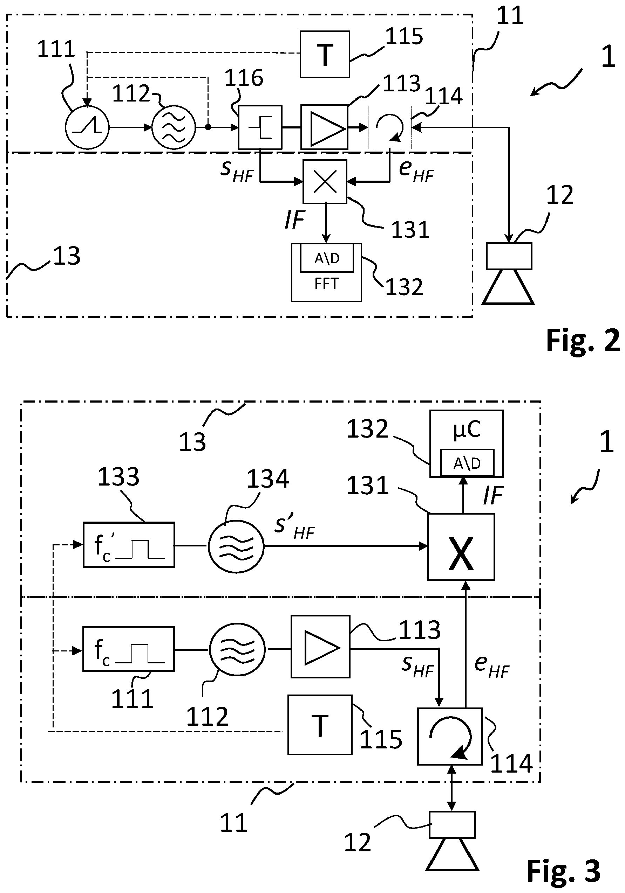

Der prinzipielle schaltungstechnische Aufbau eines nach dem FMCW Verfahren arbeitenden Füllstands-Messgerätes 1 ist in Fig. 2 dargestellt: Zur Erzeugung des Radar-Signals $S_{HF}$ umfasst das Messgerät 1 eine Signalerzeugungs-Einheit 11, die ein entsprechendes elektrisches Hochfrequenz-Signal $s_{HF}$ generiert und der Antenne 12 zuführt. Dabei definiert die Frequenz des Hochfrequenz-Signals $s_{HF}$ die Frequenz des im Mikrowellenbereich liegenden Radar-Signals $S_{HF}$. Daher muss die Hochfrequenz-Signalerzeugungs-Einheit 11, 12 ausgelegt sein, um das elektrische Hochfrequenz-Signal $s_{HF}$ mit der bei FMCW erforderlichen, rampenförmigen Änderung von dessen Frequenz zu erzeugen.

Wie in Fig. 2 dargestellt ist, umfasst die Signalerzeugungs-Einheit 11 zur Erzeugung des Hochfrequenz-Signals $s_{HF}$ einen Hochfrequenz-Oszillator 112, der mittels einer Rampenerzeugungs-Einheit 111 geregelt wird. Die Regelung erfolgt dabei gemäß einer Phasenregelung (im englischen als "*Phase Locked Loop, PLL*" bekannt). Somit wird die Frequenz des Hochfrequenz-Oszillators 112 einerseits stabilisiert. Andererseits wird hierüber die rampenförmige Frequenzänderung des Hochfrequenz-Signals $s_{HF}$ eingestellt.

Bei der rampenförmigen Frequenzänderung gemäß dem FMCW-Prinzip erhöht sich die Frequenz des Hochfrequenz-Signals $s_{HF}$ periodisch wiederholend innerhalb eines vordefinierten Frequenzbandes Δf mit einer konstanten Änderungsrate. Dabei kann die Periodizität der einzelnen Frequenzrampen in einem Bereich von einigen 100 ms liegen. Die Dauer der einzelnen Rampe kann im Bereich zwischen 100 μs und 100 ms liegen. Die Lage des Frequenzbandes Δf ist unter Berücksichtigung regulatorischer Vorgaben einzustellen, weswegen als Frequenzband Δf vorzugsweise Frequenzbänder um Frequenzen von 6 GHz, 26 GHz, 79 GHz oder 120 GHz implementiert sind. Die Bandbreite liegt je nach Lage des Frequenzbandes Δf insbesondere zwischen 0,5 GHz und 10 GHz.

In der Praxis wird das Hochfrequenz-Signal $s_{HF}$ im Fall von FMCW nicht kontinuierlich erzeugt. Vielmehr wird die rampenförmige Änderung nach einer definierten Anzahl an aufeinanderfolgenden Frequenzrampen für eine definierte Pausenzeit unterbrochen. Aus dieser Anzahl an aufeinanderfolgenden Frequenzrampen, bzw. aus deren jeweiliger Rampendauer, und der anschließenden Pausenzeit ergibt sich bei FMCW die entsprechende Messrate $r_m$, mit der das FMCW-basierte Füllstandsmessgerät 1 den Füllstand L zyklisch neu bestimmt. Die Zyklen-Dauer beträgt hierbei in der Praxis zwischen 0,3 Hz und 30 Hz.

Zum Aussenden wird das elektrische Hochfrequenz-Signal $s_{HF}$ innerhalb der Signalerzeugungs-Einheit 11 über einen Signalteiler 116, einen Sende-Verstärker 113 und eine Sende-/Empfangsweiche 114 der Antenne 12 zugeführt. Das eingehende Radar-Signal $E_{HF}$, das von der Füllgut-Oberfläche reflektiert ist, wird durch die Sende-/Empfangs-Antenne 12 in ein rein elektrisches Empfangssignal $e_{HF}$ zurückgewandelt. Im Anschluss wird das Empfangssignal $e_{HF}$ in einer Auswertungs-Einheit 13 nach etwaiger Empfangsverstärkung (nicht in Fig. 2 dargestellt) mittels eines Mischers 131 mit dem auszusendenden Hochfrequenz-Signal $s_{HF}$ gemischt. Hierzu wird das Hochfrequenz-Signal $s_{HF}$ aus dem Signalteiler 116 der Signalerzeugungs-Einheit 11 abgezweigt. Dadurch wird ein beim FMCW-Verfahren typisches Auswertungssignal IF erzeugt, das die Basis zur Ermittlung des Abstandes d bzw. des Füllstandes L bildet. Dabei ist die Frequenz des Auswertungssignals IF gemäß dem FMCW-Prinzip proportional zum Abstand d zur Füllgut-Oberfläche.

Zur Bestimmung der Frequenz des Auswertungssignals IF digitalisiert ein Analog-/DigitalWandler einer Rechen-Einheit 134 in der Auswertungs-Einheit 13 das Auswertungssignal IF. Somit kann die Rechen-Einheit 134 das digitalisierte Auswertungssignal einer (Fast-) Fourier-Transformation, kurz FFT unterziehen. Dabei entspricht die Frequenz des globalen Maximums des entsprechenden FFT-Spektrums im Idealfall dem Abstand d zur Füllgut-Oberfläche.

Ein schaltungstechnischer Aufbau eines Füllstandsmessgerätes 1, das nach dem Pulslaufzeit-Verfahren arbeitet, ist in Fig. 3 gezeigt: Zur Erzeugung des pulsförmigen Hochfrequenz-Signals $S_{HF}$ umfasst auch die in Fig. 3 gezeigte Schaltung des Füllstandsmessgerätes 1 eine Signalerzeugungs-Einheit 11. Im Falle des Pulslaufzeit-Verfahrens ist die Signalerzeugungs-Einheit 11 so konzipiert, dass sie elektrische Hochfrequenz-Pulse $s_{HF}$ mit einer definierten Taktrate $f_c$ erzeugt. Hierzu umfasst die Signalerzeugungs-Einheit 11 im gezeigten Ausführungsbeispiel einen ersten Pulsgenerator 111, der einen ersten Hochfrequenz-Oszillator 112 ansteuert.

Durch die Schwingfrequenz des Hochfrequenz-Oszillators 112 wird die Frequenz der Mikrowellenpulse $S_{HF}$, $E_{HF}$ festgelegt. Dabei kann der Hochfrequenz-Oszillator 112 im einfachsten Fall als Schwingquarz ausgelegt sein. Es kann auch ein VCO ("*Voltage Controlled Oscillator*") eingesetzt werden. In diesem Fall wird der Hochfrequenz-Oszillator 112 durch den Pulsgenerator 111 mittels eines entsprechenden Gleichspannungssignals angesteuert. Hierdurch definiert der Pulsgenerator 111 die Pulsdauer der einzelnen Mikrowellenpulse $S_{HF}$ sowie die Taktrate $f_c$, mit der die Mikrowellenpulse $S_{HF}$ ausgesendet werden. Standardmäßig wird als Hochfrequenz-Oszillator 112 ein Halbleiterbasierter Digital-Schwingkreis verwendet. Die Taktrate $f_c$, mit der die einzelnen Mikrowellenpulse $s_{HF}$ angeregt werden, beträgt in der Praxis zwischen 100 KHz und 1 MHz. Die hierdurch vom Hochfrequenz-Oszillator 112 erzeugten Hochfrequenz-Pulse $s_{HF}$ werden analog zum FMCW-Verfahren über einen Sende-Verstärker 113 und eine Sende-/Empfangsweiche 114 der Antenne 12 zugeführt, so dass sie entsprechend als Mikrowellenpulse $S_{HF}$ ausgesendet werden.

Da über die Antenne 121 außerdem die reflektierten Mikrowellenpulse $E_{HF}$ empfangen werden, führt die Sende-/Empfangsweiche 114 das entsprechende Empfangssignal $e_{HF}$ in der Auswertungs-Einheit des Füllstandsmessgerätes 1 einem Mischer 131 zu. Im Gegensatz zu der gezeigten Ausführungsvariante kann anstelle der Antenne 12 auch eine elektrisch leitfähige Sonde wie ein Hohlleiter oder ein Koaxialkabel eingesetzt werden, die sich gen Behälterboden erstreckt. Bei Implementierung dieser unter dem Begriff TDR (*"Time Domain Reflectometry"*) bekannten Ausführungsvariante sind im Gegensatz zu der in Fig. 2 gezeigten Schaltung die Hochfrequenz-Oszillatoren 111, 133 nicht erforderlich.

Mittels des Mischers 131 erfolgt die beim Pulslaufzeit-Verfahren charakteristische Unterabtastung des Empfangssignals $e_{HF}$. Hierzu wird das Empfangssignal $e_{HF}$ durch den Mischer 131 mit elektrischen Abtast-Pulsen $s'_{HF}$ gemischt. Dabei unterscheidet sich die Abtastrate $f'_c$, mit der die Abtast-Pulse $s'_{HF}$ erzeugt werden, um einen definierte, relative Abweichung $\phi$ von weit weniger als 0,1 Promille von der Taktrate $f_c$ der erzeugten Hochfrequenz-Pulse $s_{HF}$.

Erzeugt werden die Abtast-Pulse $s'_{HF}$ in der Auswertungs-Einheit 13 analog zur Signalerzeugungs-Einheit 13 von einem zweiten Pulsgenerator 133, der einen zweiten Hochfrequenz-Oszillator 134 ansteuert. Somit wird korrespondierend zu den Hochfrequenz-Pulsen $s_{HF}$ die Frequenz der Abtastpulse $s'_{HF}$ durch den zweiten Hochfrequenz-Oszillator 134 definiert. Dabei ist die Frequenz beider Hochfrequenz-Oszillatoren 112, 134 in der Praxis identisch eingestellt. Der zweite Pulsgenerator 134 steuert hierbei wiederum die Abtast-Rate $f'_c$, mit der die Abtast-Pulse $s'_{HF}$ erzeugt werden.

Durch das Mischen des Empfangssignals $e_{HF}$ mit den elektrischen Abtast-Pulse $s'_{HF}$ durch den Mischer 131 wird ein für das Pulslaufzeit-Verfahren typisches Auswertungssignal IF erzeugt, welches das Empfangssignal $e_{HF}$ zeitgedehnt abbildet. Dabei ist der Zeitdehnungsfaktor proportional zur Abweichung $\phi$ zwischen der Taktrate $f_c$ und der Abtastrate $f'_c$. Dementsprechend definiert sich die Messrate $r_m$ im Fall des Pulslaufzeit-Verfahrens als die Taktrate $f_c$, geteilt durch die Abweichung $\phi$ gemäß

$$r_m = \frac{f_c}{\varphi}$$

Vorteilhaft an der Zeitdehnung ist, dass das Auswertungssignal IF aufgrund der Zeitdehnung im Vergleich zum reinen Empfangssignal $e_{HF}$ technisch deutlich einfacher auswertbar ist: Der Grund hierfür ist, dass das Empfangssignal $e_{HF}$ aufgrund der hohen Ausbreitungsgeschwindigkeit der Mikrowellenpulse $S_{HF}$, $E_{HF}$ mit Lichtgeschwindigkeit eine entsprechend kurze Zeitskala t im Nanosekundenbereich aufweist. Durch die Zeitdehnung erhält das Auswertungssignal ZF eine Zeitskala im Millisekunden-Bereich.

Mittels des zeitgedehnten Auswertungssignals IF ermittelt die Rechen-Einheit 132 nach entsprechender Analog-/Digital-Wandlung im Anschluss wiederum den Füllstand L, indem im Auswertungssignal IF das zum Abstand d korrespondierende Signal-Maximum bestimmt wird.

Sowohl die in Fig. 2 dargestellte FMCW-basierte Ausführungsvariante, als auch die in Fig. 3 gezeigte Pulslaufzeit-basierte Variante des Füllstandsmessgerätes 1 umfassen in ihrer Signalerzeugungs-Einheit 11 jeweils einen Sende-Verstärker 113. In Bezug zu den weiteren Bauteilen der Signalerzeugungs-Einheit 11 und der Auswertungswährend 13 erhitzt sich dieses Bauteil während des Messbetriebs in der Praxis am stärksten. In einer Vielzahl an Anwendungen ist dies nicht kritisch, da das Füllstandsmessgerät 1 oftmals lediglich unter Außentemperatur bzw. Raumtemperatur eingesetzt wird. Hierdurch kann die am Sende-Verstärker 113 entstehende Wärme hinreichend abgeleitet werden, so dass die Temperatur weit unterhalb der kritischen Junction-Temperatur von 150 °C verbleibt. Kritisch wird es jedoch, wenn das Füllstandsmessgerät 1 an Einsatzorten eingesetzt wird, an denen zumindest temporär mehr als 100 °C vorherrschen, wie beispielsweise bei Reinigungsprozessen im Zuge der Lebensmittelproduktion.

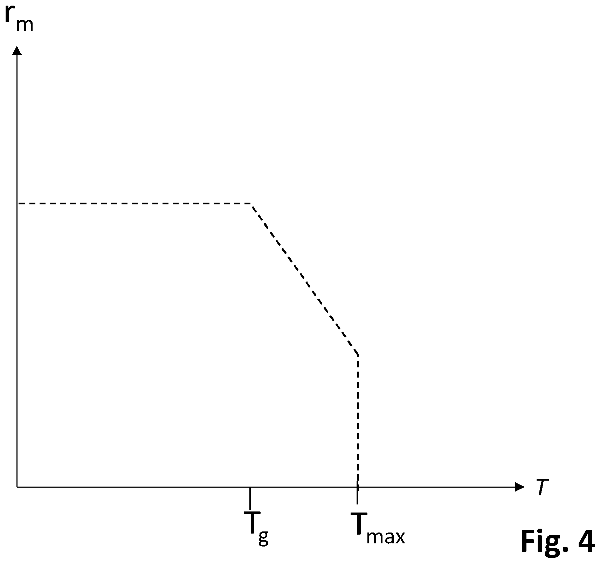

Erfindungsgemäß umfassen die zwei Ausführungsvarianten des Füllstandsmessgerätes 1, die in Fig. 2 und Fig. 3 beschrieben sind, daher einen Temperatursensor 115, der in der Signalerzeugungs-Einheit 11 am Sende-Verstärker 113 angebracht ist, so dass die dortige Temperatur gemessen werden kann. Hierdurch ist es möglich, die die Signalerzeugungs-Einheit 11 und die Auswertungs-Einheit 13 des Füllstandsmessgerät 1 derart zu konfigurieren, dass die Messrate $r_m$ adaptiv an die vom Temperatursensor 115 gemessene Temperatur angepasst wird. Beispielhaft verdeutlicht ist dies anhand von Fig. 4:

Gemäß dem dortigen Graphen misst das Füllstandsmessgerät 1 den Füllstand L unterhalb einer definierten Grenztemperatur $T_g$ am Temperatursensor 115 von beispielsweise 100 °C mit konstanter bzw. unverminderter Messrate $r_m$, mit der es auch unter Normalbedingungen misst. Oberhalb der Grenztemperatur $T_g$ verringert das Füllstandsmessgerät 1 die Messrate $r_m$ jedoch linear mit steigender Temperatur. Im Gegensatz zu linearer Verringerung ist im Gegensatz zur gezeigten Darstellung auch eine stufenweise Verringerung denkbar. Hierdurch wird vor allem der Wärmeentwicklung durch den Sende-Verstärker 113 entgegengewirkt. Somit erhöht sich bei entsprechender Verringerung der Messrate $r_m$ pro °C trotz einer hohen Umgebungstemperatur (beispielsweise hervorgerufen durch einen Reinigungsschritt im Behälter 2) die Temperatur im Füllstandsmessgerät 1 nicht auf oberhalb einer kritischen Maximaltemperatur $T_{max}$ von beispielsweise 150 °C. Sollte mittels des Temperatursensors 115 dennoch eine Überschreitung der kritischen Maximaltemperatur $T_{max}$ detektiert werden, so kann sich das Füllstandsmessgerät 1 in diesem Fall bei entsprechender Auslegung beispielsweise selbstständig abschalten. Hierdurch wird zum einen sichergestellt, dass das Füllstandsmessgerät 1 keine fehlerhaften Füllstandswerte L misst und zum anderen keinen irreparablen Schaden nimmt.

Es versteht sich von selbst, dass die erfindungsgemäße Regelung der Messrate $r_m$ auch für Füllstandsmessgeräte 1, die nicht gemäß dem Pulslaufzeit- oder FMCW-Verfahren arbeiten, angewendet werden kann. Ebenso kann das das erfindungsgemäße Verfahren auch allgemein bei Radar-basierter Abstandsmessung angewendet werden.

**Bezugszeichenliste**

| | |
|---|---|
| 1 | Füllstandsmessgerät |
| 2 | Objekt/Füllgut |
| 3 | Behälter |
| 4 | Übergeordnete Einheit |
| 11 | Signalerzeugungs-Einheit |
| 12 | Antennen-Anordnung |
| 13 | Auswertungs-Einheit |
| 111 | Rampenerzeugungs-Einheit bzw. Pulsgenerator |
| 112 | Hochfrequenz-Oszillator |
| 113 | Verstärker |
| 114 | Sende-/Empfangsweiche |
| 115 | Temperatursensor |
| 116 | Signalteiler |
| 131 | Mischer |
| 132 | Microcontroller |
| 133 | Pulsgenerator |
| 134 | Zweiter Hochfrequenz-Oszillator |
| d | Abstand |
| $E_{HF}$, $e_{HF}$ | Empfangenes Radar-Signal bzw. Empfangssignal |
| $f_c$ | Taktrate |
| $f'_c$ | Abtastrate |
| h | Einbauhöhe bzw. Messbereich |
| IF | Auswertungssignal |
| L | Füllstand |
| $r_m$ | Messrate |
| $S_{HF}$, $s_{HF}$ | Radar-Signal bzw. Hochfrequenz-Signal |
| $s'_{HF}$ | Abtast-Signal |
| $\phi$ | Relative Abweichung zwischen der Taktrate und der Abtastrate |

**Patentansprüche**

1. Radar basiertes Füllstandsmessgerät zur Messung eines Füllstandes eines in einem Behälter (2) befindlichen Füllgutes (3), umfassend:

   - Eine Signalerzeugungs-Einheit (11), die ausgelegt ist, entsprechend einer einstellbaren Messrate ($r_m$) ein elektrisches Hochfrequenz-Signal ($s_{HF}$) zu erzeugen,
   - eine Antennen-Anordnung (12), mittels der das Hochfrequenz-Signal ($s_{HF}$) als Radar-Signal ($S_{HF}$) in Richtung des Füllgutes (3) aussendbar und nach Reflektion an der Oberfläche des Füllgutes (3) als entsprechendes Empfangssignal ($e_{HF}$) empfangbar ist,
   - eine Auswertungs-Einheit (13), die ausgelegt ist, um zumindest anhand des Empfangssignals ($e_{HF}$) in der einstellbaren Messrate ($r_m$) den Füllstand (L) zyklisch neu zu bestimmen,
   - einen Temperatursensor (115), der ausgelegt ist die Temperatur an der Signalerzeugungs-Einheit (11) und/oder an der Auswertungs-Einheit (13) zu messen,

   **dadurch gekennzeichnet, dass**

   die Signalerzeugungs-Einheit (11) und die Auswertungs-Einheit (13) ausgelegt sind, die Messrate ($r_m$) derart in Abhängigkeit der gemessenen Temperatur zu regeln, dass die Messrate ($r_m$) zumindest oberhalb einer definierten Grenztemperatur ($T_g$) mit steigender Temperatur vermindert wird, und

   dass die Signalerzeugungs-Einheit (11) und die Auswertungs-Einheit (13) ausgelegt sind, die Füllstandsmessung zu stoppen, sofern die gemessene Temperatur eine vordefinierte Maximaltemperatur ($T_{max}$) überschreitet.

2. Füllstandsmessgerät nach Anspruch 1, wobei die Signalerzeugungs-Einheit (11) und die Auswertungs-Einheit (13) die Messrate ($r_m$) derart in Abhängigkeit der gemessenen Temperatur regeln, dass die Messrate ($r_m$) oberhalb der Grenztemperatur ($T_g$) mit steigender Temperatur linear oder stufenweise vermindert wird.

**3.** Füllstandsmessgerät nach einem der vorhergehenden Ansprüche, wobei die Signalerzeugungs-Einheit (11) und die Auswertungs-Einheit (13) ausgelegt sind, die Füllstandsmessung zu stoppen, sofern die gemessene Temperatur 150 °C überschreitet.

**4.** Füllstandsmessgerät nach zumindest einem der vorhergehenden Ansprüche, wobei zumindest die Signalerzeugungs-Einheit (11) als monolithischer Bestandteil eines ASIC's ausgelegt ist.

**5.** Füllstandsmessgerät nach Anspruch 4, wobei die Signalerzeugungs-Einheit (11) einen Sende-Verstärker (113) zur Verstärkung des Hochfrequenz-Signals ($s_{HF}$) umfasst, und wobei der Temperatursensor (115) am Sende-Verstärker angeordnet ist.

**6.** Füllstandsmessgerät nach einem der vorhergehenden Ansprüche, wobei die Signalerzeugungs-Einheit (11) ausgelegt ist, das elektrische Hochfrequenz-Signal ($s_{HF}$) gemäß dem Pulslaufzeit-Verfahren zu erzeugen, und wobei die Auswertungs-Einheit (13) ausgelegt, den Füllstand (L) gemäß dem Pulslaufeit-Verfahren anhand des abgetasteten Empfangssignals ($e_{HF}$) zu bestimmen.

**7.** Füllstandsmessgerät nach Anspruch 1 bis 5, wobei die Signalerzeugungs-Einheit (11) ausgelegt ist, das elektrische Hochfrequenz-Signal ($s_{HF}$) gemäß dem FMCW-Verfahren zu erzeugen, und wobei die Auswertungs-Einheit (13) ausgelegt, den Füllstand (L) gemäß dem FMCW-Verfahren mittels Mischen des Hochfrequenz-Signals ($s_{HF}$) und des Empfangssignals ($e_{HF}$) zu bestimmen.

**8.** Verfahren zur Radar-basierten Messung eines Füllstandes (L) eines in einem Behälter (2) befindlichen Füllgutes (3) mittels des Füllstandsmessgerätes (1) nach einem der Ansprüche 1 bis 7, folgende Verfahrensschritte umfassend:

- Erzeugung eines elektrischen Hochfrequenz-Signals ($s_{HF}$) entsprechend einer veränderbaren Messrate ($r_m$),
- Aussenden des Hochfrequenz-Signals ($s_{HF}$) als Radar-Signal ($S_{HF}$) in Richtung des Objektes (2),
- Empfang des reflektierten Radar-Signals ($E_{HF}$) als elektrisches Empfangssignal ($e_{HF}$) nach Reflektion an dem Objekt (2),
- zyklisch neue Bestimmung des Abstandes (d) anhand von zumindest dem Empfangssignal ($e_{HF}$) in der einstellbaren Messrate ($r_m$),
- Messung der Temperatur an der Signalerzeugungs-Einheit (11) und/oder an der Auswertungs-Einheit (13),

**dadurch gekennzeichnet, dass**

die Messrate ($r_m$) derart in Abhängigkeit der gemessenen Temperatur geregelt wird, dass die Messrate ($r_m$) zumindest oberhalb einer definierten Grenztemperatur ($T_g$) mit steigender Temperatur vermindert wird, und dass die Füllstandsmessung gestoppt wird, sofern die gemessene Temperatur eine vordefinierte Maximaltemperatur überschreitet.

## Claims

**1.** A radar-based fill level measuring device for measuring a fill level of a filling material (3) located in a container (2), comprising:

- a signal generating unit (11) that is configured to generate an electrical high frequency signal ($s_{HF}$) based on an adjustable measurement rate ($r_m$),
- an antenna arrangement (12), which can be used to transmit the high frequency signal ($s_{HF}$) toward the filling material (3) as a radar signal ($s_{HF}$) and can then, following reflection on the surface of the filling material (3), be received as a corresponding reception signal ($e_{HF}$),
- an evaluation unit (13) that is configured to cyclically redetermine the fill level (L) at least on the basis of the reception signal ($e_{HF}$) at the adjustable measurement rate ($r_m$),
- a temperature sensor (115) that is configured to measure the temperature on the signal generating unit (11) and/or on the evaluation unit (13),

**characterized in that**

the signal generating unit (11) and the evaluation unit (13) are configured to regulate the measurement rate ($r_m$) in such a way on the basis of the measured temperature that the measurement rate ($r_m$) is at least reduced above a defined limit temperature ($T_g$) as the temperature increases, and that the signal generating unit (11) and the evaluation unit (13) are configured to stop the fill level measurement insofar as the measured temperature exceeds a predefined maximum temperature ($T_{max}$).

**2.** A fill level measuring device according to claim 1, wherein the signal generating unit (11) and the evaluation unit (13) regulate the measurement rate ($r_m$) in such a way on the basis of the measured temperature that the measurement rate ($r_m$) is reduced in either a linear fashion or in steps above a defined limit temperature ($T_g$) as the temperature increases.

3. A fill level measuring device according to one of the preceding claims, wherein the signal generating unit (11) and the evaluation unit (13) are configured to stop the level measurement insofar as the measured temperature exceeds 150°C.

4. A fill level measuring device according to at least one the preceding claims, wherein at least the signal generating unit (11) is configured as a monolithic component of an ASIC.

5. A fill level measuring device according to claim 4, wherein the signal generating unit (11) comprises a transmission amplifier (113) for amplifying the high frequency signal ($s_{HF}$) and wherein the temperature sensor (115) is arranged on the transmission amplifier.

6. A fill level measuring device according to one of the preceding claims, wherein the signal generating unit (11) is configured to generate the electrical high frequency signal ($s_{HF}$) according to the time-of-flight method and wherein the evaluation unit (13) is configured to determine the fill level (L) according to the time-of-flight method on the basis of the scanned reception signal ($e_{HF}$).

7. A fill level measuring device according to claims 1 to 5, wherein the signal generating unit (11) is configured to generate the electrical high frequency signal ($s_{HF}$) according to the FMCW method, and wherein the evaluation unit (13) is configured to determine the fill level (L) according to the FMCW method by mixing the high frequency signal ($s_{HF}$) and the reception signal ($e_{HF}$).

8. A method for radar-based measurement of a fill level (L) of a filling material (3) present in a container (2) using the fill level measuring device (1) according to one of the claims 1 to 7, comprising the following process steps:

   - Generation of an electrical high frequency signal ($s_{HF}$) based on a variable measurement rate ($r_m$),
   - Transmission of the high frequency signal ($s_{HF}$) toward the object (2) as a radar signal ($s_{HF}$),
   - Reception of the reflected radar signal (EHF) as an electrical reception signal ($e_{HF}$) following reflection on the object (2),
   - Cyclical redetermination of the distance (d) on the basis of at least the reception signal ($e_{HF}$) at the adjustable measurement rate ($r_m$),
   - Measurement of the temperature on the signal generating unit (11) and/or on the evaluation unit (13),

**characterized in that**
the measurement rate ($r_m$) is regulated in such a way on the basis of the measured temperature that the measurement ($r_m$) rate is reduced as temperature increases at least above a defined limit temperature ($T_g$) and that the fill level measurement is stopped insofar as the measured temperature exceeds a predefined maximum temperature.

**Revendications**

1. Transmetteur de niveau basé sur un radar, lequel transmetteur est destiné à la mesure d'un niveau d'un produit (3) se trouvant dans un réservoir (2), lequel transmetteur comprend :

   - une unité de génération de signaux (11), laquelle est conçue pour générer un signal électrique haute fréquence ($s_{HF}$) en fonction d'un taux de mesure réglable ($r_m$),
   - un arrangement d'antennes (12), au moyen duquel le signal haute fréquence ($s_{HF}$) peut être émis sous forme de signal radar ($S_{HF}$) en direction du produit (3) et peut être reçu, après réflexion à la surface du produit (3), sous forme de signal de réception correspondant ($e_{HF}$),
   - une unité d'évaluation (13), laquelle est conçue pour redéterminer cycliquement le niveau (L) au moins à l'aide du signal de réception ($e_{HF}$) au taux de mesure réglable ($r_m$),
   - un capteur de température (115), lequel est conçu pour mesurer la température sur l'unité de génération de signaux (11) et/ou sur l'unité d'évaluation (13),

   **caractérisé**

   **en ce que** l'unité de génération de signaux (11) et l'unité d'évaluation (13) sont conçues pour réguler le taux de mesure ($r_m$) en fonction de la température mesurée de telle sorte que le taux de mesure ($r_m$) est réduit avec une température croissante au moins au-dessus d'une température limite définie ($T_g$), et **en ce que** l'unité de génération de signaux (11) et l'unité d'évaluation (13) sont conçues pour arrêter la mesure de niveau lorsque la température mesurée dépasse une température maximale prédéfinie ($T_{max}$).

2. Transmetteur de niveau selon la revendication 1, pour lequel l'unité de génération de signaux (11) et l'unité d'évaluation (13) régulent le taux de mesure ($r_m$) en fonction de la température mesurée de telle sorte que le taux de mesure ($r_m$) au-dessus de la température limite ($T_g$) est réduit de manière linéaire ou par paliers lorsque la température augmente.

**3.** Transmetteur de niveau selon l'une des revendications précédentes, pour lequel l'unité de génération de signaux (11) et l'unité d'évaluation (13) sont conçues pour arrêter la mesure de niveau lorsque la température mesurée dépasse 150 °C.

**4.** Transmetteur de niveau selon l'une des revendications précédentes, pour lequel au moins l'unité de génération de signaux (11) est conçue en tant que composant monolithique d'un ASIC.

**5.** Transmetteur de niveau selon la revendication 4,

pour lequel l'unité de génération de signaux (11) comprend un amplificateur d'émission (113) destiné à amplifier le signal haute fréquence ($s_{HF}$), et
pour lequel le capteur de température (115) est disposé sur l'amplificateur d'émission.

**6.** Transmetteur de niveau selon l'une des revendications précédentes,

pour lequel l'unité de génération de signaux (11) est conçue pour générer le signal électrique haute fréquence ($s_{HF}$) selon la méthode du temps de propagation des impulsions, et
pour lequel l'unité d'évaluation (13) est conçue pour déterminer le niveau (L) selon la méthode du temps de propagation des impulsions à l'aide du signal de réception échantillonné ($e_{HF}$).

**7.** Transmetteur de niveau selon la revendication 1 à 5,

pour lequel l'unité de génération de signaux (11) est conçue pour générer le signal électrique haute fréquence ($s_{HF}$) selon la méthode FMCW, et
pour lequel l'unité d'évaluation (13) est conçue pour déterminer le niveau (L) selon la méthode FMCW en mélangeant le signal haute fréquence ($s_{HF}$) et le signal de réception (eHF).

**8.** Procédé destiné à la mesure, basée sur un radar, d'un niveau (L) d'un produit (3) se trouvant dans un réservoir (2) au moyen du transmetteur de niveau (1) selon l'une des revendications 1 à 7, lequel procédé comprend les étapes suivantes :

- Génération d'un signal électrique haute fréquence ($s_{HF}$) correspondant à un taux de mesure variable ($r_m$),
- Émission du signal haute fréquence ($s_{HF}$) sous forme de signal radar ($S_{HF}$) en direction de l'objet (2),
- Réception du signal radar réfléchi ($E_{HF}$) en tant que signal de réception électrique ($e_{HF}$) après réflexion sur l'objet (2),

- Nouvelle détermination cyclique de la distance (d) à l'aide d'au moins le signal de réception ($e_{HF}$) au taux de mesure réglable ($r_m$),
- Mesure de la température sur l'unité de génération de signaux (11) et/ou sur l'unité d'évaluation (13),

**caractérisé**

**en ce que** le taux de mesure ($r_m$) est régulé en fonction de la température mesurée de telle sorte que le taux de mesure ($r_m$) diminue avec l'augmentation de la température au moins au-dessus d'une température limite définie ($T_g$),
et **en ce que** la mesure de niveau est arrêtée lorsque la température mesurée dépasse une température maximale prédéfinie.

**Fig. 1**

Fig. 2

Fig. 3

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012104858 A1
- DE 102013108490 A1
- WO 2017137136 A1
- DE 102016108594 B3